(19) Europäisches Patentamt / European Patent Office / Office européen des brevets

(11) **EP 3 126 646 B1**

(12) **EUROPÄISCHE PATENTSCHRIFT**

(45) Veröffentlichungstag und Bekanntmachung des Hinweises auf die Patenterteilung:
**06.06.2018   Patentblatt 2018/23**

(21) Anmeldenummer: **15741780.9**

(22) Anmeldetag: **24.03.2015**

(51) Int Cl.:
*F01N 9/00* [(2006.01)]        *F01N 3/08* [(2006.01)]
*F01N 13/00* [(2010.01)]        *F01N 3/10* [(2006.01)]
*F01N 11/00* [(2006.01)]

(86) Internationale Anmeldenummer:
**PCT/EP2015/056170**

(87) Internationale Veröffentlichungsnummer:
**WO 2015/150153 (08.10.2015 Gazette 2015/40)**

(54) **REGENERATIONSVERFAHREN FÜR ABGASNACHBEHANDLUNGSSYSTEME**

REGENERATION METHOD FOR EXHAUST-GAS AFTERTREATMENT SYSTEMS

PROCÉDÉ DE RÉGÉNÉRATION POUR DES SYSTÈMES DE TRAITEMENT DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2014   DE 102014206455**

(43) Veröffentlichungstag der Anmeldung:
**08.02.2017   Patentblatt 2017/06**

(73) Patentinhaber: **Umicore AG & Co. KG**
**63457 Hanau-Wolfgang (DE)**

(72) Erfinder:
- **ADAM, Frank**
  **63589 Linsengericht (DE)**
- **MUELLER, Sebastian**
  **63477 Maintal (DE)**
- **PALM, David**
  **63694 Limeshain (DE)**
- **KUNERT, Susanne**
  **64342 Seeheim-Jugenheim (DE)**

(56) Entgegenhaltungen:
WO-A1-2006/069652        WO-A1-2010/034452
DE-A1- 19 918 756

**Beschreibung**

Die vorliegende Erfindung richtet sich auf ein Verfahren zur Regeneration von Abgasnachbehandlungssystemen, die befähigt sind, im mageren Abgas Stickoxide zu speichern und im fetten Abgas Stickoxide zu Stickstoff zu reduzieren. Die Erfindung wird angewandt bei Abgasnachbehandlungssystemen, die aus mindestens einem motornah platzierten Stickoxidspeicherkatalysator und mindestens einem im Unterboden des Fahrzeugs befindlichen Stickoxidspeicherkatalysator bestehen und das Abgas von überwiegend mager betriebenen Benzinmotoren reinigen sollen.

Das Abgas von Verbrennungsmotoren in Kraftfahrzeugen enthält typischerweise die Schadgase Kohlenmonoxid (CO) und Kohlenwasserstoffe (HC), Stickoxide ($NO_x$) und gegebenenfalls Schwefeloxide ($SO_x$), sowie Partikel, die überwiegend aus Rußrückständen und gegebenenfalls anhaftenden organischen Agglomeraten bestehen. Diese werden als Primäremissionen bezeichnet. CO, HC und Partikel sind Produkte der unvollständigen Verbrennung des Kraftstoffs im Brennraum des Motors. Stickoxide entstehen im Zylinder aus Stickstoff und Sauerstoff der Ansaugluft, wenn die Verbrennungstemperaturen lokal 1400°C überschreiten. Schwefeloxide resultieren aus der Verbrennung organischer Schwefelverbindungen, die in nicht-synthetischen Kraftstoffen immer in geringen Mengen enthalten sind. Zur Entfernung dieser für Umwelt und Gesundheit schädlichen Emissionen aus den Abgasen von Kraftfahrzeugen sind eine Vielzahl katalytischer Abgasreinigungstechnologien entwickelt worden, deren Grundprinzip üblicherweise darauf beruht, dass das zu reinigende Abgas über einen Katalysator geleitet wird, der aus einem Durchfluss- (flow-through) oder einem Wandflusswabenkörper (wall-flow) und einer darauf aufgebrachten katalytisch aktiven Beschichtung besteht. Der Katalysator fördert die chemische Reaktion verschiedener Abgaskomponenten unter Bildung unschädlicher Produkte wie beispielsweise Kohlendioxid und Wasser.

Dabei unterscheiden sich Wirkweise und Komposition der zum Einsatz kommenden Katalysatoren je nach Zusammensetzung des zu reinigenden Abgases und je nach zu erwartendem Abgastemperaturniveau am Katalysator zum Teil erheblich. Eine Vielzahl der im Katalysator als katalytisch aktive Beschichtung zum Einsatz kommenden Kompositionen enthält Komponenten, in denen unter bestimmten Betriebsbedingungen eine oder mehrere Abgasbestandteile zwischenzeitlich gebunden und bei einer geeigneten Änderung der Betriebsbedingungen wieder gezielt freigesetzt werden können. Komponenten mit einer derartigen Kapazität werden nachstehend allgemein als Speichermaterialien bezeichnet.

Beispielsweise werden sauerstoffspeichernde Materialien in Dreiwegkatalysatoren zur Entfernung von CO, HC und $NO_x$ aus dem Abgas von überwiegend und im Mittel stöchiometrischem Luft/Kraftstoff-Gemisch betriebenen Benzinmotoren (Otto-Motoren) eingesetzt. Die bekanntesten Sauerstoffspeichermaterialien sind Cer-Zirkon-Mischoxide, die mit weiteren Oxiden, insbesondere mit Selten-Erd-Metalloxiden wie beispielsweise Lanthanoxid, Praseodymoxid, Neodymoxid oder Yttriumoxid dotiert sein können (Autoabgaskatalysatoren, Grundlagen - Herstellung - Entwicklung - Recycling - Ökologie, Christian Hagelüken, 2. Auflage, 2005, S. 49; Catalytic Air Pollution Control, Commercial Technology, R. Heck et al., 1995, S. 73-112).

Stickoxidspeicherkatalysatoren werden zur Entfernung der im mageren Abgas von so genannten Magermotoren (Diesel, Lean-GDI) enthaltenen Stickoxide verwendet. Dabei beruht die Reinigungswirkung darauf, dass in einer mageren Betriebsphase (Speicherphase, Magerbetrieb) des Motors die Stickoxide vom Speichermaterial des Speicherkatalysators in Form von Nitraten gespeichert werden. In einer darauf folgenden fetten Betriebsphase (Regenerationsphase, Fettbetrieb, DeNOx Phase) des Motors werden die zuvor gebildeten Nitrate zersetzt und die wieder freiwerdenden Stickoxide mit den reduzierend wirkenden, fetten Bestandteilen des Abgases während des Fettbetriebs am Speicherkatalysator zu Stickstoff, Kohlendioxid und Wasser umgesetzt. Als fette Bestandteile des Abgases werden unter anderem Kohlenwasserstoffe, Kohlenmonoxid, Ammoniak und Wasserstoff bezeichnet.

Die Arbeitsweise von Stickoxid-Speicherkatalysatoren wird ausführlich in der SAE-Schrift SAE 950809 beschrieben. Die Zusammensetzung von Stickoxid-Speicherkatalysatoren ist dem Fachmann hinreichend bekannt. Bei den Stickoxid-Speichermaterialien handelt es sich in der Regel um basische Verbindungen der Alkali- oder Erdalkalimetalle wie zum Beispiel Oxide, Hydroxide oder Carbonate des Bariums und Strontiums, die auf geeigneten Trägermaterialien in fein verteilter Form aufgebracht sind. Darüber hinaus weist ein Stickoxid-Speicherkatalysator noch katalytisch aktive Edelmetalle der Platingruppe und Sauerstoff-Speichermaterialien auf. Diese Zusammensetzung verleiht einem Stickoxid-Speicherkatalysator unter stöchiometrischen Betriebsbedingungen die Funktion eines Dreiweg-Katalysators (US2009229249 sowie dort zitierte Literatur).

Die Speicherphase für Stickoxide (Magerbetrieb) dauert gewöhnlich 100 bis 2000 Sekunden und hängt von der Speicherkapazität des Katalysators und der Konzentration der Stickoxide im Abgas ab. Bei gealterten Katalysatoren mit verminderter Speicherkapazität kann die Dauer der Speicherphase aber auch auf 50 Sekunden und weniger absinken. Die Regenerationsphase (Fettbetrieb) ist dagegen immer wesentlich kürzer und dauert nur wenige Sekunden (5 s - 20 s). Das während der Regeneration aus dem Stickoxid-Speicherkatalysator austretende Abgas weist im Wesentlichen keine Schadstoffe mehr auf und ist annähernd stöchiometrisch zusammengesetzt. Seine Luftzahl [Lambda] (Lambda: zeigt das Verhältnis von Kraftstoff zu Luft im Abgas an - siehe unten) ist während dieser Zeit nahezu gleich 1. Zum Ende der Regenerationsphase reichen die freigesetzten Stickoxide und der an den Sauerstoff-Speicherkomponenten des Katalysators gebundene Sauerstoff nicht mehr aus, um alle fetten Abgasbestandteile zu oxidieren. Es kommt daher zu einem Durchbruch dieser Bestandteile durch den Katalysator und die Luftzahl sinkt auf einen Wert unter 1. Das durchbrechende Abgas enthält ggf. größere Mengen an aus der Überreduktion von Stickoxiden gebildetem Ammoniak ($NH_3$). Dieser Durchbruch zeigt das Ende der Regeneration an und kann mit Hilfe einer so genannten Lambda-Sonde hinter dem Speicherkatalysator registriert werden (sogenanntes sensorgesteuertes System).

Neben der Verminderung der Primäremissionen zwingen neuere Abgasgesetzgebungen insbesondere in den USA (GHG Emission Standard; SULEV), nicht nur diese drastisch zu senken, sondern fordern auch, die Bildung der durch die Abgaskomponenten selbst erzeugten Sekundäremissionen, wie z.B. Methan ($CH_4$) und das potente Treibhausgas Lachgas ($N_2O$) maximal zu unterdrücken (Federal Register; Vol. 75, No. 88, 2010 / Rules and Regulations, Page 25399; Federal Register; Vol. 77, No. 199, 2012 / Rules and Regulations, Page 62799 ; http://epa.gov/climatechange/ghgemissions/gases/n2o.html). Derartige Richtlinien für den Ausstoß der Sekundäremissionen $NH_3$, $CH_4$ und $N_2O$ werden aktuell ebenfalls in der Europäischen Union diskutiert und sollen ggf. noch in die 2014 in Kraft tretende EU6, auf jeden Fall jedoch in eine spätere Gesetzgebung integriert werden.

Lachgas ist - wie gesagt - ein starkes Treibhausgas. In den USA wird bereits ein Grenzwert für die $N_2O$-Emission von 0,01 g/Meile diskutiert. Dieser Wert ist mit bisherigen Abgasnachbehandlungskonzepten mit NOx-Speicherkatalysatoren nur schwer zu erreichen (SAE, 2013 Umicore, 2013-01-1300 $N_2O$ Emissions of Low Emission Vehicles).

Moderne Systeme zur Vermeidung von schädlichen Abgasen bei überwiegend mager betriebenen Verbrennungsmotoren arbeiten häufig bereits mit mindestens zwei Stickoxidspeicherkatalysatoren, wobei einer zur schnelleren Erwärmung motornah positioniert ist und der andere im kälteren Unterbodenbereich verbaut wird (WO2006/069652A1 ; WO2010/034452A1 ; JP2009150282A2). Bei einer derartigen Anordnung kann z.B. ein größerer Temperaturbereich durch die Aktivitätsfenster der Stickoxidspeicherkatalysatoren abgedeckt werden.

Es ist bekannt, dass Stickoxidspeicherkatalysatoren, wenn sie mit einem fetten Abgasgemisch beaufschlagt werden, $NH_3$ produzieren (SAE 2005-01-3876; DE102013218234). In Systemen bestehend aus motornahem (cc) Stickoxidspeicherkatalysator (NSC, LNT, NSR) und einem im Unterboden (uf) befindlichen Stickoxidspeicherkatalysator ergibt sich daher die Gefahr einer $N_2O$-Produktion am uf-NSC durch Oxidation des motornah gebildeten $NH_3$, da bei der Regeneration des cc-NSCs mit fettem Luft/Kraftstoffbereich gearbeitet werden muss. Die Direkteinspritzung des Kraftstoffs in den Brennraum von Benzinmotoren und der turnusgemäß nach dem Auslassventil angeordnete Turbolader führen zu einer stetigen Abkühlung der Abgastemperatur. Diese niedrigen Temperaturen reichen vor allem im städtischen Fahrbetrieb und bei Überlandfahrten nicht mehr aus, um den Unterbodenkatalysator mit ausreichender Konversionseffizienz insbesondere für $N_2O$ zu betreiben. Demgegenüber ist bekannt, dass die $N_2O$-Bildung an einem Stickoxidspeicherkatalysator bei überwiegend mager betriebenen Verbrennungsmotoren in einem bestimmten Temperaturintervall und bei bestimmten $\lambda$-Werten besonders intensiv ist (DE102013218234 sowie dort zitierte Literatur). Die kühlere Abgastemperatur am im Unterbodenbereich platzierten Stickoxidspeicherkatalysator bewirkt demzufolge eine erhöhte Bildung des Treibhausgases $N_2O$ aus dem am motornah befindlichen Stickoxidspeicherkatalysator während der Regeneration gebildeten $NH_3$. Dabei bewegt sich die Betttemperatur dieses Unterbodenkatalysators häufig permanent im optimalen Lachgasbildungsfenster von 220-400°C.

EP1536111B1 beschreibt ein Verfahren zur Verminderung von Sekundäremissionen wie Methan oder $N_2O$ im Abgas von Verbrennungsmotoren, die mit NOx-Speicherkatalysatoren ausgerüstet sind. Um die Sekundäremissionen vermindern zu können, welche während des Fettbetriebes zur Regeneration des NOx-Speicherkatalysators über letzterem gebildet werden, wird vorgeschlagen, einen zusätzlichen Katalysator abstromseitig des NOx-Speicherkatalysators anzuordnen. Dieser Katalysator ist in der Lage, Methan und $N_2O$ zu oxidieren und besteht aus zwei verschiedenen katalytisch wirkenden Materialien. Zur Oxidation von Methan wird ein palladiumhaltiger Katalysator vorgeschlagen und zur Verminderung von $N_2O$ ein Fe-Zeolith Katalysator. Es ist bekannt, dass Methan bzw. $N_2O$ in magerer Atmosphäre effektiv über palladiumhaltige bzw. Fe-Zeolith Katalysatoren umgesetzt werden können. Allerdings ist die Umsetzung von $N_2O$ in magerer Atmosphäre über Pd-Katalysatoren sehr gering und die Umsetzung über Fe-Zeolith Katalysatoren erfolgt erst bei höheren Temperaturen von über ca. 400°C. Zur Sicherstellung, dass der Katalysator zur $N_2O$-Reduktion deutlich mager betrieben wird, was zur Umsetzung des Methans auch sicherlich sinnvoll ist, schlägt die EP1536111B1 zusätzlich eine Sekundärlufteinblasung vor dem abstromseitig angeordnetem Katalysator vor. Wie eingangs beschrieben führt dies jedoch nicht zu der gewünschten $N_2O$-Verminderung bei niedrigen Temperaturen.

Die DE102010014468A1 richtet sich auf ein Verfahren zur Abgasnachbehandlung von im Wesentlichen mager betriebenen Verbrennungsmotoren sowie ein entsprechendes vorteilhaftes Abgasnachbehandlungssystem. Insbesondere bezieht sich diese Erfindung auf die Reduzierung des Anteils des Treibhausgases $N_2O$ im Gesamtabgas eines entsprechenden Verbrennungssystems mit einem NOx-Speicherkatalysator als Abgasreinigungselement. Ziel der Erfindung ist es, den nach dem NOx-Speicherkatalysator angeordneten $N_2O$-Verminderungskatalysator unter $\lambda \leq 1$ Bedingungen zu betreiben, sobald das vom NOx-Speicherkatalysator gebildete $N_2O$ den $N_2O$-Verminderungskatalysator erreicht.

Die Aufgabe der vorliegenden Erfindung ist es, eine Verbesserung hinsichtlich der Bilanz der $N_2O$-Sekundäremission bei einem Abgasnachbehandlungssystem zu erreichen, welches aus einem motornahen und einem davon in einem bestimmten Abstand platzierten Stickoxidspeicherkatalysator besteht. Dies sollte unter der Prämisse erfolgen, dass andere schädliche Abgaskomponenten bzw. der Kraftstoffverbrauch nicht über die Maßen negativ beeinflusst werden.

Die Aufgabe wird gelöst durch ein Verfahren gemäß Anspruch 1. Bevorzugte Ausgestaltungen des erfindungsgemäßen Verfahrens werden in den von Anspruch 1 abhängigen Unteransprüchen thematisiert.

Dadurch, dass man zur Regeneration eines Abgasnachbehandlungssystems für überwiegend mager betriebene Benzinverbrennungsmotoren aufweisend einen oder mehrere motornah platzierte Stickoxidspeicherkatalysator und einen oder mehrere im Unterboden des Fahrzeugs befindliche Stickoxidspeicherkatalysatoren während der Regeneration der motornah platzierten Stickoxidspeicherkatalysatoren keine komplette Entleerung dieser Stickoxidspeicherkatalysatoren bewirkt, sofern sich die im Unterboden befindlichen Stickoxidspeicherkatalysatoren in einem Temperaturbereich befinden, bei dem Ammoniak zu Lachgas oxidiert wird, gelangt man völlig überraschend, dafür aber nicht minder vorteilhaft zur Lösung der gestellten Aufgabe. Diese Art der temperaturgesteuerten Regelungsstrategie erlaubt es, das Automobil mit ca. 40% weniger Lachgasemissionen (gemessen im FTP- oder NEDC-Zyklus) zu betreiben. Zwar erhöhen sich die NOx-Emissionen um knapp 10% doch können diese durch motorseitige Maßnahmen (z.B. entsprechende AGR-Einstellung) besser kontrolliert werden als die eben genannten Lachgasemissionen. In der Gesamtschau ergibt sich dadurch ein wesentlich verbessertes Emissionsprofil, welches es ermöglicht sowohl die strikten US als auch zukünftig striktere EU-Abgasnormen einzuhalten.

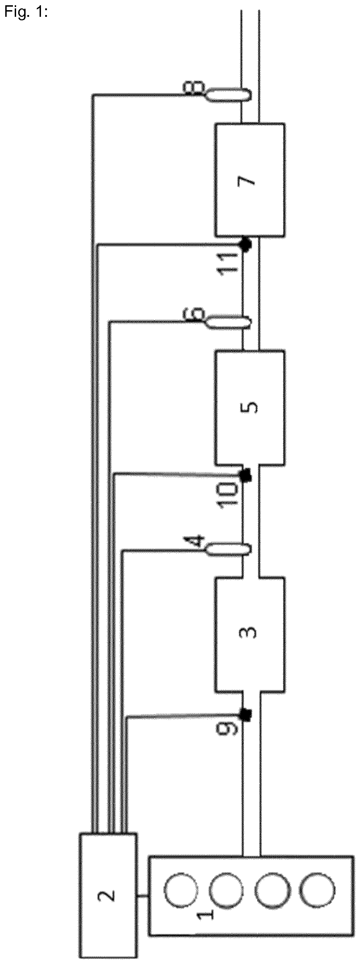

Die vorliegende Verfahrensweise bei der Regeneration von Stickoxidspeicherkatalysatoren kommt demnach vorteilhaft in einem System zum Einsatz, das mindestens einen motornahen Stickoxidspeicherkatalysator und mindestens eine weiteren Stickoxidspeicher im Unterbodenbereich des Fahrzeugs aufweist. Statt jeweils eines Stickoxidspeicherkatalysators können auch mehrere Bricks zum Einsatz kommen. Diese können beabstandet zueinander oder auf Stoß vorzugsweise in einem Gehäuse untergebracht sein. Die Stickoxidspeicherkatalysatoren können vergesellschaftet sein mit entsprechenden Sonden zur Messung der Abgasbedingungen ausgewählt aus der Gruppe bestehend aus NOx-Sensor, $\lambda$-Sensor und Temperatursensor. In einer bevorzugten Ausführungsform weist das Abgasnachbehandlungssystem zusätzlich einen oder mehrere Dreiwegkatalysatoren zwischen den motornah platzierten Stickoxidspeicherkatalysatoren und dem Motor auf (Fig. 1). Der Fachmann weiß, wie er dieses Gesamtsystem optimal ausgestalten kann, so dass es vorteilhaft in einem Fahrzeug mit der dort befindlichen ECU zusammenarbeiten kann und entsprechende OBD-Maßnahmen erfolgreich durchgeführt werden können. Der zusätzliche, optionale Dreiwegkatalysator z.B. hat im Gesamtsystem die Aufgabe, im mageren als Oxidationskatalysator mit niedrigem Light-Off NO, HC und CO zu oxidieren. Bei Lambda = 1 funktioniert dieser gemäß einem normalen Dreiwegkatalysator und setzt HC/CO/NOx miteinander um. Im fetten Abgasgemisch fungiert dieser auch gemäße eines HC-DeNOx-Katalysators, welche mit den überschüssigen fetten Abgasbestandteilen (z.B. HCs, CO etc.) NOx zur Reduktion bringt.

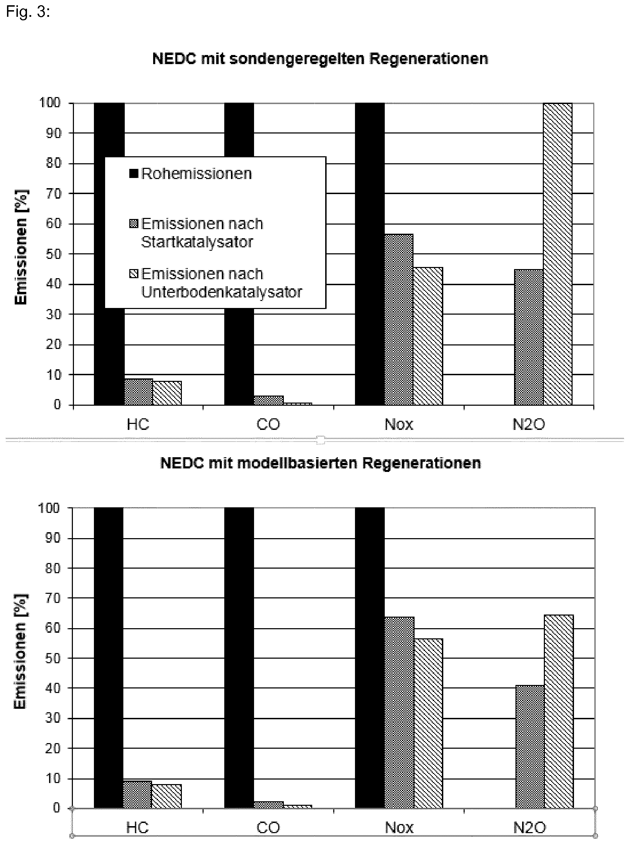

Erfindungsgemäß ist gefordert, dass man während der Regeneration des oder der motornah platzierten Stickoxidspeicherkatalysatoren diese in einem bestimmten Temperaturintervall, welches zu dieser Zeit an dem(n) im Unterboden befindlichen Stickoxidspeicherkatalysator(en) vorherrscht, nicht vollständig regeneriert. Es hat sich gezeigt, dass bei vollständiger Regeneration von Stickoxidspeicherkatalysatoren neben dem Fettdurchbruch, der normalerweise das Ende eines Regenerationszyklus indiziert (sogenanntes sensorgesteuertes Verfahren), auch erklägliche Mengen an Ammoniak den Stickoxidspeicherkatalysator verlassen. Dieses Ammoniak wird bei bestimmten Abgastemperaturen im stromab befindlichen Stickoxidspeicherkatalysator bevorzugt zu Lachgas oxidiert, welches dann ungehindert in die Umwelt abgegeben wird. Es ist daher bevorzugt, dass die Regeneration des oder der motornahen Stickoxidspeicherkatalysatoren(s) nur zu einem Anteil von 90 %, mehr bevorzugt 80 % und ganz besonders bevorzugt nur zu einem Anteil von 70 % der unter den Umgebungsbedingungen vorhandenen Speicherkapazität durchgeführt wird. D.h., dass nach der Regeneration entsprechende Anteile an Stickoxiden im Stickoxidspeicherkatalysator verbleiben (sogenanntes modellbasiertes Verfahren). Dies hat zur Folge, dass der Fettdurchbruch und damit die Generierung von Ammoniak fast vollständig unterdrückt werden kann (Fig. 3). Letzteres sorgt wiederum dafür, dass im Unterboden über den dort befindlichen Stickoxidspeicherkatalysatoren kein Lachgas mehr gebildet wird. Es ist zu bemerken, dass diese Maßnahme dazu führt, dass der im Unterboden befindliche Stickoxidspeicherkatalysator von weniger fettem Abgas erreicht wird. Dies kann zu einer geringfügigen Erhöhung der NOx-Emissionen führen. Gleichfalls ist zu bedenken, dass diese Art der Regenerationsstrategie bedingt, dass der motornahe Stickoxidspeicherkatalysators öfter regeneriert werden muss, da per Regeneration nur ein bestimmter Anteil der darin befindlichen Stickoxide regeneriert wird. Dies führt jedoch allenfalls zu einer geringfügigeren Erhöhung des Treibstoffverbrauchs, da pro Regeneration in der Regel nur unwesentlich mehr Treibstoff eingesetzt werden muss. Allerdings erscheint der Regelungsaufwand etwas erhöht zu sein.

Wie weiter oben schon angedeutet erfolgt die hier angedachte Regelungsstrategie dann besonders bevorzugt, wenn sich der oder die im Unterboden befindlichen Stickoxidspeicherkatalysatoren in einem bestimmten Temperaturfenster befinden. Dieses Temperaturfenster begünstigt die Bildung von Lachgas aus Ammoniak. Es ist daher bevorzugt, dass die erfindungsgemäße Regelungsstrategie nur dann durchgeführt wird, wenn die Temperatur der Stickoxidspeicherkatalysatoren im Unterboden des Fahrzeugs im Bereich von 220 - 400 °C vorzugsweise 225 - 380 °C und ganz besonders bevorzugt bei 230 - 350 °C durchführt. Mittels dieser Maßnahme wird eine maximale Unterdrückung der Lachgasbildung am im Unterboden befindlichen Stickoxidspeicherkatalysator verhindert (Fig. 4).

Die Temperatur während der Regeneration der cc-Stickoxidspeicherkatalysatoren im Hinblick auf gespeicherte Stickoxide kann vom Fachmann entsprechend der vorliegenden Erfindung gewählt werden. Es ist bevorzugt, die erfindungsgemäße Regenerationsstrategie dann durchzuführen, wenn die motornah platzierten Stickoxidspeicherkatalysatoren sich in einem Temperaturintervall zwischen 150°C und 500°C, besonders bevorzugt zwischen 200°C und 450°C befinden. Mit dieser Ausführungsform ist die erfindungsgemäße Regenerationsstrategie bestens geeignet, die Lachgasbildung und damit die Emission von Lachgas in die Umwelt maximal zu unterdrücken.

Das Verbrennungsluftverhältnis setzt die tatsächlich für eine Verbrennung zur Verfügung stehende Luftmasse $m_{L,tats}$ ins Verhältnis zur mindestens notwendigen stöchiometrischen Luftmasse $m_{L,st}$, die für eine vollständige Verbrennung benötigt wird:

$$\lambda = \frac{m_{L,tats}}{m_{L,st}}$$

Ist $\lambda = 1$, so gilt das Verhältnis als stöchiometrisches Verbrennungsluftverhältnis mit $m_{L,tats} = m_{L,st}$; das ist der Fall, wenn alle Brennstoff-Moleküle theoretisch vollständig mit dem Luftsauerstoff reagieren können, ohne dass Sauerstoff fehlt oder unverbrannter Sauerstoff übrig bleibt.

Für Verbrennungsmotoren gilt:

$\lambda < 1$ (z. B. 0,9) bedeutet "Luftmangel": fettes oder auch reiches Abgasgemisch

$\lambda > 1$ (z. B. 1,1) bedeutet "Luftüberschuss": mageres oder auch armes Abgasgemisch

Aussage: $\lambda = 1,1$ bedeutet, dass 10% mehr Luft vorhanden ist, als zur stöchiometrischen Reaktion notwendig wäre. Dies wird gleichzeitig als Luftüberschuss bezeichnet. Vorzugsweise wird während der Regeneration jedoch ein Luft-Kraftstoff-Gemisch aufrechterhalten, welches einem Lambda-Wert von 0,8 bis 1 entspricht. Besonders bevorzugt liegt dieser Wert zwischen 0,85 und 0,99, ganz besonders bevorzugt zwischen 0,95 und 0,99.

Sofern im Text von Unterboden (uf) die Rede ist, so bezieht sich dies im Zusammenhang mit der vorliegenden Erfindung auf einen Bereich im Fahrzeug, bei dem der Katalysator im Abstand von 0,2 - 2,5 m, mehr bevorzugt 0,5 - 2 m und ganz besonders bevorzugt 0,7 - 1,5 m nach Ende des ersten motornahen Katalysators, vorzugsweise unter der Fahrerkabine angebracht ist.

Als motornah (cc) wird im Rahmen dieser Erfindung eine Anordnung des Katalysators in einem Abstand vom Abgasauslass der Zylinder des Motors von weniger als 70 cm, bevorzugt weniger als 50 cm und ganz besonders bevorzugt weniger als 30 cm bezeichnet. Bevorzugt ist der motornahe Katalysator direkt nach der Zusammenführung der Abgaskrümmer in die Abgasleitung angeordnet.

Die Regelung des hier beschriebenen Verfahrens kann nach dem Fachmann bekannten Maßnahmen erfolgen. Es können wie oben beschrieben zur Unterstützung der Regelung und Einstellung der Abgasanlage verschiedenste Sensoren zum Einsatz kommen, die jederzeit den Zustand des Abgases im Hinblick auf bestimmte Komponenten messen und diese Werte zur Motorsteuerungseinheit (ECU) weiterleiten. Aufgrund von Kostenerwägungen erscheint eine Ausführungsform jedoch besonders bevorzugt, bei der die Regelung und Einstellung der Abgasanlage teilweise oder ausschließlich über in der ECU gespeicherte Datenwerte (sogenannte Maps) erfolgt. Als Sensoren die hier infrage kommen, sind die schon weiter oben genannten zu nennen.

Sowohl mit Diesel- als auch insbesondere mager verbrennende Benzinmotoren betriebene Fahrzeuge produzieren Rußpartikel, welche ebenfalls durch entsprechende Gesetzgebungen reglementiert sind. Der Ausstoß von Rußpartikel ist vor dem Hintergrund der Feinstaubbelastung in Innenstädten beispielsweise besonders zu limitieren. Vor diesem Hintergrund ist es vorteilhaft in Abgasanlagen von Fahrzeugen, welche mit derartigen Motoren betrieben werden, Partikelfilter einzusetzen. Der Fachmann weiß, wie er solche vorteilhaft in entsprechende Abgasanlage zu positionieren hat. Beispielsweise eignet sich für Dieselfahrzeuge, welche ein relativ kaltes Abgas produzieren, die Einbringung eines Dieselpartikelfilters im vorderen Bereich der Abgasanlage, welcher naturgemäß mehr Hitze erfährt, als der Abgasanlage im Unterboden des Fahrzeugs zur Verfügung steht. Die hohe Hitze ist für eine ausreichende Regeneration des Dieselpartikelfilters besonders vorteilhaft. Fahrzeuge mit mager verbrennenden Benzinmotoren hingegen produzieren ein relativ heißes Abgas. Hier ist ebenfalls denkbar, den Partikelfilter vorzugsweise im Unterboden des Fahrzeugs anzusiedeln. Dieser kann dabei vorteilhafter Weise vor oder hinter dem uf-Stickoxidspeicherkatalysator angebracht werden. In einer besonders bevorzugten Ausgestaltung der vorliegenden Erfindung wird der Partikelfilter jedoch mit dem Stickoxidspeicherkatalysator dergestalt kombiniert, dass dieser als Beschichtung auf dem Partikelfilter vorhanden ist. Diese Ausgestaltung ist für die Fahrzeuge mit mager verbrennenden Benzinmotoren äußerst bevorzugt.

NOx-Speicherkatalysator

NOx-Speicherkatalysatoren bestehen aus Materialien, die Stickoxide unter mageren Abgasbedingungen aus dem Abgasstrom entfernen können und unter Lambda=1 oder fetten Abgasbedingungen die Stickoxide desorbieren und umsetzen können.

Dem Fachmann sind die hier einzusetzenden Stickoxidspeicherkatalysatoren hinlänglich bekannt (EP0982066A2, EP1317953A1, WO2005/092481A1). Bzgl. des Aufbaus und der Zusammensetzung von Stickoxidspeicherkatalysatoren (NSC) wird weiterhin auf die Ausführungen in EP1911506A1 sowie EP1101528A2 und dort genannte Literatur verwiesen. Die verwendeten Katalysatormaterialien werden zusammen oder getrennt voneinander nach den, dem Fachmann bekannten Verfahren auf monolithische, inerte, 4- oder 6-eckige Waben aufweisende Körper aus Keramik (z.B. Cordierit) oder Metall in Form einer Beschichtung aufgebracht. Die Wabenkörper besitzen in einem engen Raster über ihren Querschnitt angeordnete, parallel zur Längsachse der Wabenkörper liegende Strömungskanäle für das zu reinigende Abgas. Die katalytisch aktive Beschichtung wird auf oder in den Wandflächen der die Strömungskanäle begrenzenden Trennwände in Konzentrationen von 50 bis 450 Gramm pro Liter (g/l) Volumen der Wabenkörper, bevorzugt 200 - 400 g/l und ganz besonders bevorzugt 250 - 350 g/l abgeschieden. Das Katalysatormaterial enthält das Stickoxidspeichermaterial und eine katalytisch aktive Komponente. Das Stickoxidspeichermaterial wiederum besteht aus der eigentlichen Stickoxidspeicherkomponente, die auf einem Trägermaterial in hochdisperser Form abgeschieden ist. Als Speicherkomponenten werden vorwiegend die basischen Oxide der Alkalimetalle, der Erdalkalimetalle, insbesondere aber Bariumoxid, und der Seltenerdmetalle, insbesondere Ceroxid, eingesetzt, welche mit Stickstoffdioxid zu den entsprechenden Nitraten reagieren. Bevorzugte Speichermaterialien sind Verbindungen enthaltend Mg, Ba, Sr, La, Ce, Mn und K. Als katalytisch aktive Komponenten werden gewöhnlich die Edelmetalle der Platingruppe (z.B. Pt, Pd, Rh) verwendet, die in der Regel gemeinsam mit der Speicherkomponente auf dem Trägermaterial abgeschieden werden. Als Trägermaterial wird überwiegend aktives, hochoberflächiges Aluminiumoxid eingesetzt.

TWC:

Dreiwegkatalysatoren (TWC) sind in der Lage die drei Schadstoffkomponenten HC, CO und NOx simultan aus einem stöchiometrischen Abgasgemisch (λ = 1 Bedingungen) zu entfernen. Ferner können Sie die Oxide des Stickstoffs unter fetten Abgasbedingungen umsetzen. Sie enthalten als katalytisch aktive Komponenten zumeist Metalle der Platingruppe, wie Pt, Pd und Rh, wobei Pd und Rh besonders bevorzugt sind. Die katalytisch aktiven Metalle sind häufig hochdispers auf hochoberflächigen Oxiden des Aluminiums, Zirkoniums und Titans oder Mischungen davon abgeschieden, welche durch weitere Übergangselemente wie z.B. La, Y, Pr, etc. stabilisiert sein können. Ferner enthalten Dreiwegkatalysatoren Sauerstoffspeichermaterialien (z.B. Ce/Zr Mischoxide; siehe unten). Eine geeignete dreiwegekatalytische Beschichtung ist beispielsweise in EP181970B1, WO2008-113445A1, WO2008-000449A2, der Anmelderin beschrieben.

Sauerstoff-Speicher:

Sauerstoff speichernde Materialien besitzen Redox-Eigenschaften und können mit oxidierenden Komponenten wie Sauerstoff oder Stickoxiden in oxidierender Atmosphäre bzw. mit reduzierenden Komponenten wie Wasserstoff oder Kohlenmonoxid in reduzierender Atmosphäre reagieren. In der EP1911506A1 wird die Ausführung der Abgasnachbehandlung eines im Wesentlichen im stöchiometrischen Bereich arbeitenden Verbrennungsmotors beschrieben. Eingesetzt wird dort ein mit einem Sauerstoffspeichermaterial versehener Partikelfilter. Vorteilhafter Weise besteht ein derartiges Sauerstoff speicherndes Material aus einem Cer/Zirkon-Mischoxid. Weitere Oxide von insbesondere seltenen Erdenmetallen können vorhanden sein. So enthalten bevorzugte Ausgestaltungen des erfindungsgemäßen Partikelfilters zusätzlich Lanthanoxid oder Neodymoxid. Am häufigsten wird Ceroxid eingesetzt, welches sowohl als $Ce_2O_3$ als auch als $CeO_2$ vorliegen kann. Es wird diesbezüglich auch auf die Offenbarung der US6605264B2 und US6468941B1 verwiesen. Derartige Sauerstoff speichernde Materialien finden bevorzugt Anwendung in so genannten Dreiwegkatalysatoren. Dreiwegkatalysatoren enthalten Sauerstoffspeichermaterialien, die meist aus Oxiden des Cers bestehen und evtl. mit anderen Metalloxiden als thermisch stabiler Mischphasen eingesetzt werden (z.B. Ce/Zr Mischoxide). Weitere Beispiele für Sauerstoff speichernde Materialien umfassen Cer und Praseodym oder entsprechende Mischoxide, welche zusätzlich folgende Komponenten ausgewählt aus der Gruppe von Zirkon, Neodym, Yttrium und Lanthan enthalten können. Häufig werden diese Sauerstoff speichernde Materialien mit Edelmetallen wie Pd, Rh und /oder Pt dotiert, wodurch sich die Speicherkapazität und Speichercharakteristik modifizieren lässt. Diese Stoffe sind - wie gesagt - in der Lage, im Mageren Sauerstoff aus dem Abgas zu entfernen und unter fetten Abgasbedingungen wieder frei zu setzen. Dadurch wird verhindert, dass die beim kurzzeitigen Abweichen des Kraftstoff-Luft Verhältnisses von Lambda=1 ins Magere der NOx-Umsatz über dem TWC abnimmt und es zu NOx-Durchbrüchen kommt. Ferner verhindert ein gefüllter Sauerstoffspeicher, dass es zu HC und CO Durchbrüchen kommt, wenn das Abgas kurzzeitig ins Fette übergeht, da unter fetten Abgasbedingungen zuerst der gespeicherte Sauerstoff mit dem überschüssigen HC und CO abreagiert, bevor es zum Durchbruch kommt. Der Sauerstoffspeicher dient in diesem Falle als Puffer gegen Schwankungen um Lambda=1. Ein halb gefüllter Sauerstoffspeicher weist die beste Performance auf, um kurzzeitige Abweichungen von Lambda=1 abfangen zu können. Um den Füllstand des Sauerstoffspeichers im Betrieb feststellen zu können, werden Lambda-Sensoren verwendet. Die Sauerstoffspeicherkapazität korreliert mit dem Alterungszustand des gesamten Dreiwegkatalysators. Die Bestimmung der Speicherkapazität dient im Rahmen der OBD (On Board Diagnose) zur Erkennung der aktuellen Aktivität und somit des Alterungszustandes des Katalysators. Die in den Veröffentlichungen beschriebenen Sauerstoff speichernden Materialien sind vorteilhafter Weise solche, welche eine Änderung ihres Oxidationszustandes zulassen. Weitere derartige Speichermaterialien und Dreiwegkatalysatoren sind z.B. in der WO05113126A1, US6387338BA, US7041622BB, EP2042225A1 beschrieben.

Substrate:

Die Stickoxidspeicherkatalysatoren können auf einem monolithischen Kanal-Fluß-Tragkörper (Flow-Through) oder einem Wand-Fluß-Substrat (Wall-Flow) bzw. Partikelfilter angeordnet sein.

Flow-Through-Monolithe sind im Stand der Technik übliche Katalysatorträger, die wie im Fall der oben genannten Filtermaterialien aus Metall oder keramischen Materialien bestehen können. Bevorzugt werden feuerfeste Keramiken wie zum Beispiel Cordierit eingesetzt. Die Flow-Through-Monolithe aus Keramik besitzen meist eine wabenförmige Struktur, die aus durchgehenden Kanälen bestehen, weshalb Flow-Through-Monolithe auch als Kanal-Fluss-Monolithe bezeichnet werden. Das Abgas kann durch die Kanäle strömen und kommt dabei mit den Kanalwänden in Kontakt, welche mit einer katalytisch aktiven Substanz und evtl. einem Speichermaterial beschichtet sind. Die Anzahl der Kanäle pro Fläche wird durch die Zelldichte charakterisiert, welche üblicher Weise zwischen 300 und 900 Zellen pro Quadrat inch (cells per square inch, cpsi) liegt. Die Wanddicke der Kanalwände beträgt bei Keramiken zwischen 0,5 - 0,05 mm.

Als Partikelfilter können alle im Stand der Technik üblichen Filterkörper aus Metall und/oder keramischen Materialien eingesetzt werden. Dazu gehören beispielsweise metallische Gewebe- und Gestrickfilterkörper, Sintermetallkörper und Schaumstrukturen aus keramischen Materialien. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierbei wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Das Katalysatormaterial kann in Form von Beschichtungen in und/oder auf den porösen Wänden zwischen An- und Abströmkanälen vorliegen. Es können auch Filter zum Einsatz kommen, die direkt oder mithilfe von Bindern aus den entsprechenden Katalysatormaterialien extrudiert wurden, das heißt, dass die porösen Wände direkt aus dem Katalysatormaterial bestehen, wie es beispielsweise im Falle von SCR-Katalysatoren auf Vanadiumbasis der Fall sein kann.

Bevorzugt einzusetzende Filtersubstrate können der EP1309775A1, EP2042225A1 oder EP1663458A1 entnommen werden.

Beschichten

Unter dem Begriff des Beschichtens wird das Aufbringen von katalytisch aktiven Materialien und/oder Speicherkomponenten auf einen weitgehend inerten Tragkörper verstanden, welcher wie ein zuvor beschriebener Wall-Flow-Filter bzw. Flow-Through-Monolith aufgebaut sein kann. Die Beschichtung übernimmt die eigentliche katalytische Funktion und enthält Speichermaterialien und/oder katalytisch aktive Metalle, die meist in hoch disperser Form auf temperaturstabilen hochoberflächigen Metalloxiden abgeschieden sind. Die Beschichtung erfolgt meist durch das Aufbringen einer wässrigen Suspension der Speichermaterialien und katalytisch aktiven Komponenten - auch Washcoat genannt - auf oder in die Wand des inerten Tragkörpers. Nach dem Aufbringen der Suspension wird der Träger getrocknet und gegebenenfalls bei erhöhter Temperatur kalziniert. Die Beschichtung kann aus einer Schicht bestehen oder aus mehreren Schichten aufgebaut sein, die übereinander (mehrschichtig) und/oder versetzt zueinander (gezont) auf einen Tragkörper aufgebracht werden.

Die hier dargestellte intelligente Regenerationsstrategie von motornah platzierten Stickoxidspeicherkatalysatoren in einem System bestehend aus eben diesen und im Unterboden befindlichen Stickoxidspeicherkatalysatoren erlaubt es in relativ einfacher dafür aber nicht minder vorteilhafter Weise, die Abgase von überwiegend mager betriebenen Benzinmotoren weiter zu senken. Insbesondere im Hinblick auf das schädliche Treibhausgas $N_2O$ (Lachgas) bietet die vorliegende Erfindung die Möglichkeit, dieses weiter zu reduzieren, ohne dabei die anderen Abgasimmissionen maßgeblich negativ zu beeinflussen. Dies war vor dem Hintergrund des bekannten Standes der Technik mitnichten naheliegend.

Figuren:

Fig. 1 - zeigt ein schematisches Abgassystem, mit dem die erfindungsgemäße Regenerationsstrategie bevorzugt auszuführen ist.

Fig. 2 - Regenerationsvergleich mit Lambda, HC, NOx, $NH_3$-Bildung

Fig. 3 Unterdrückung $NH_3$ motornah [Darstellung Tailpipe Emissionen im NEDC Fahrzyklus - Vergleich Komplett-Reg. vs. 90%-Reg.]

Bezugszeichen:

Fig. 1:

| 1 | mager verbrennender Benzinmotor |
|---|---|
| 2 | ECU |
| 3 | optionaler, motornaher Dreiwegkatalysator |
| 4 | $\lambda$-Sonde |
| 5 | motornaher (cc) Stickoxidspeicherkatalysator |
| 6 | NOx-Sensor oder $\lambda$-Sonde |
| 7 | im Unterboden (ub) befindlicher Stickoxidspeicherkatalysator |
| 8 | NOx-Sensor oder $\lambda$-Sonde |
| 9 - 11 | Temperaturfühler |

Beispiele:

Für die Versuchsreihe zur Reduzierung der Sekundäremissionen wurden zwei Prüfläufe eingesetzt: Im ersten Schritt wurde ein Prüflauf erstellt, der eine Modellbildung der $NH_3$-Formation über den cc-NSC in Abhängigkeit von Temperatur, Lambda sowie Fettdauer ermöglicht. Dieser Prüflauf wird im Folgenden als Modellbildung bezeichnet. Im zweiten Schritt wurde ein Prüflauf zur Verifizierung der Wirksamkeit des modellbasierten Ansatzes zur Reduzierung von Sekundäremissionen umgesetzt. Dieser Prüflauf wird im Folgenden als Verifizierung bezeichnet.

Modellbildung

Grundsätzlich setzt sich dieser Prüflauf aus stationärem Magerbetrieb sowie sondengeregelter Fettphasen bei unterschiedlichen Temperaturniveaus zusammen. Eine entsprechende Analytik ermöglicht die kontinuierliche Messung aller relevanter Emissionen während des gesamten Prüflaufs.

Zu Beginn wird der Motor für eine definierte Dauer mager betrieben ($\lambda$>1). Danach wird eine Fettphase mit definiertem Lambda-Vorgabewert eingeleitet, deren Dauer eine Sprundsonde nach cc-NSC regelt. Sobald diese Sonde einen Fettdurchbruch (typischer Spannungswert >650mV) detektiert, erfolgt der Wechsel zurück in den Magerbetrieb. Diesem Magerbetrieb schließt sich eine weitere Fettphase an, mit verändertem Lambda-Vorgabewert. Das Ende der Fettphase wird wiederum durch die Sprungsonde detektiert. Dieser Vorgang wiederholt sich bis alle Lambda-Vorgabewert abgetestet wurden. Dabei wird jeder Lambda-Vorgabewert mehrmals abgetestet um eine statistische Sicherheit zu erlangen.

Nach abgeschlossener Lambdavariation wird die Temperatur verändert und erneut alle Lambda-Vorgabewert abgetestet. Dieser Vorgang wiederholt sich bis alle definierten Temperaturniveaus abgeprüft wurden.

Unter Verwendung aller ermittelten Messdaten wird ein Modell erstellt, welches die $NH_3$-Bildung in Abhängigkeit von Temperatur und Lambda beschreibt. Dieses Modell wird im folgenden Prüflauf auf seine Wirksamkeit zur Reduzierung der Sekundäremissionen überprüft.

Verifizierung

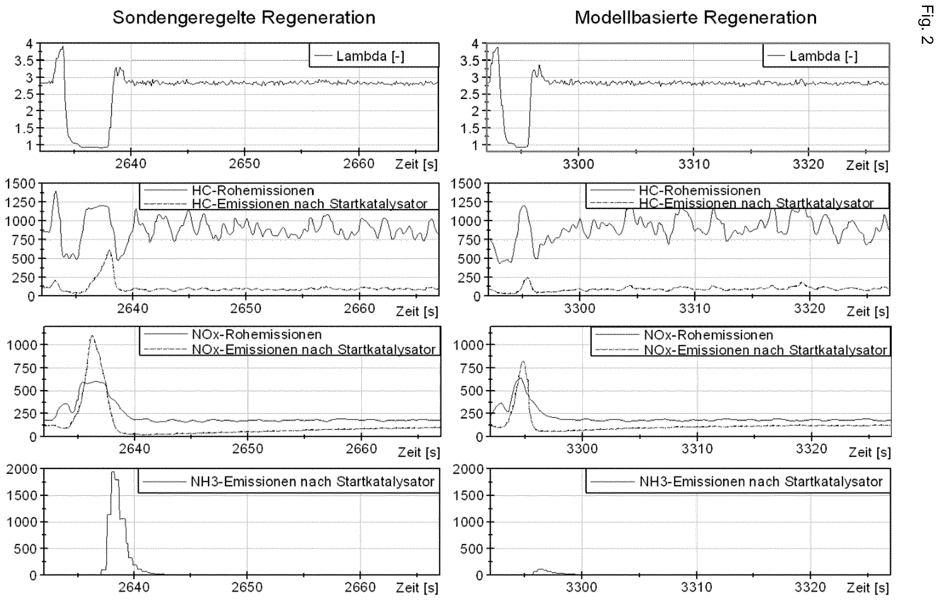

Mit Hilfe des Modells wird im Prüflauf (Beschreibung siehe oben) die Fettphase entsprechend verkürzt (Fig. 2; Modellbasierte Regeneration). Das Resultat ist eine deutliche Reduzierung der sec. Emissionen ($N_2O$, $NH_3$; Fig. 2; Fig. 3). Übertragen auf den "Neuen Europäischen Fahrzyklus" NEDC, kann auch hier eine deutliche Minderung der sekundär Emissionen festgestellt werden, bei nur geringfügigen Anstieg der NOx Tailpipe Emissionen.

Motorprüfstand:

Die Prüfläufe wurden an einem Benzinmotor V6 mit strahlgeführt, geschichtet betriebenen Brennverfahren durchgeführt. Motornah, mit ca. 0,2-1,0 m Abstand vom Motorausgang, befindet sich ein kommerziell erhältlicher Abgaskatalysator (5), welcher Oxidations- als auch NOx-Speicherfunktion aufweist. Vor diesem Katalysator wird zwecks Analyse Rohabgas entnommen und über eine Breitband-Lambdasonde (4) das Lambdasignal aufgezeichnet. Nach diesem Katalysator wird ebenfalls zwecks Analyse Abgas entnommen, das Lambdasignal mittels Breitband- und Sprungsonde (6) aufgezeichnet und die Güte der Regeneration über einen NOx-Sensor (6) kontrolliert. Über einen Laserdiodendetektor wird hier ebenfalls Ammoniak ($NH_3$) vermessen. In 1,0-2,0 Meter Abstand vom Motorausgang befindet sich ein weiterer kommerziell erhältlicher Stickoxidspeicherkatalysator (7). Nach diesem Katalysator wird erneut zwecks Analyse Abgas entnommen und das Lambdasignal mittel Sprungsonde (8) aufgezeichnet.

Die Ergebnisse sind in Figur 2 für die sondengeregelte und modelgeregelte Regeneration dargestellt.

Die Vorteile der erfindungsgemäßen Regenerationsstrategie sind in Fig. 3 zusammengefasst.

**Patentansprüche**

1. Verfahren zur Regeneration eines Abgasnachbehandlungssystems für überwiegend mager betriebene Benzinverbrennungsmotoren (1) aufweisend einen oder mehrere motornah platzierte Stickoxidspeicherkatalysator (5) und einen oder mehrere im Unterboden des Fahrzeugs befindliche Stickoxidspeicherkatalysatoren (7),
   **dadurch gekennzeichnet, dass**
   man während der Regeneration der motornah platzierten Stickoxidspeicherkatalysatoren keine komplette Entleerung dieser Stickoxidspeicherkatalysatoren (5) bewirkt, sofern sich die im Unterboden befindlichen Stickoxidspeicherkatalysatoren (7) in einem Temperaturbereich befinden, bei dem Ammoniak zu Lachgas oxidiert wird.

2. Verfahren nach Anspruch 1,
   **dadurch gekennzeichnet, dass**
   das Abgasnachbehandlungssystem zusätzlich einen oder mehrere Dreiwegkatalysatoren (3) zwischen den motornah platzierten Stickoxidspeicherkatalysatoren (5) und dem Motor (1) aufweist.

3. Verfahren nach Anspruch 1,
   **dadurch gekennzeichnet, dass**
   man die Regeneration beendet, wenn der motornah platzierte Stickoxidspeicher (5) maximal zu 90% entleert ist.

4. Verfahren nach Anspruch 3,
   **dadurch gekennzeichnet, dass**
   man nur bei einer Temperatur der Stickoxidspeicherkatalysatoren im Unterboden des Fahrzeugs (7) von 220°C - 400°C die Regeneration gemäß Anspruch 1 durchführt.

**Claims**

1. Method for the regeneration of an exhaust gas after-treatment system for predominantly lean-operated, gasoline combustion engines (1) having one or more nitrogen oxide storage catalysts (5) arranged near the engine and one or more nitrogen oxide storage catalysts (7) located in the underbody of the vehicle,
   **characterized in that,**
   during the regeneration of the nitrogen oxide storage catalysts arranged near the engine, a complete emptying of these nitrogen oxide storage catalysts (5) is not effected if the nitrogen oxide storage catalysts (7) located in the underbody are within a temperature range in which ammonia is oxidized to form nitrous oxide.

2. Method according to claim 1,
   **characterized in that**
   the exhaust gas after-treatment system additionally has one or more three-way catalysts (3) between the nitrogen oxide storage catalysts (5) arranged near the engine and the engine (1).

3. Method according to claim 1,
   **characterized in that**
   the regeneration is ended if the nitrogen oxide storage (5) arranged near the engine is, at most, 90% emptied.

4. Method according to claim 3,
   **characterized in that**
   the regeneration according to claim 1 is performed only at a temperature of the nitrogen oxide storage catalysts in the underbody of the vehicle (7) of 220 °C - 400 °C.

**Revendications**

1. Procédé de régénération d'un système de traitement en aval des gaz d'échappement pour des moteurs à combustion interne (1) fonctionnant principalement à un rapport maigre, présentant un ou plusieurs catalyseurs de stockage d'oxydes d'azote (5) placés à proximité du moteur et un ou plusieurs catalyseurs de stockage d'oxydes d'azote (7) se trouvant dans le bas de caisse du véhicule,
   **caractérisé en ce que**
   pendant la régénération des catalyseurs de stockage d'oxydes d'azote placés à proximité du moteur, aucune vidange complète de ces catalyseurs de stockage d'oxydes d'azote (5) n'est provoquée, pour autant que les catalyseurs de stockage d'oxydes d'azote (7) se trouvant dans le bas de caisse se trouvent dans une plage de températures, dans laquelle l'ammoniac est oxydé en oxyde nitreux.

2. Procédé selon la revendication 1,
   **caractérisé en ce que**
   le système de traitement en aval des gaz d'échappement présente en outre un ou plusieurs catalyseurs trois voies (3) placés entre les catalyseurs de stockage d'oxydes d'azote (5) placés à proximité du moteur et le moteur (1).

3. Procédé selon la revendication 1,
   **caractérisé en ce que**
   la régénération est achevée lorsque l'accumulateur d'oxydes d'azote (5) placé à proximité du moteur est vidé à 90 % au maximum.

4. Procédé selon la revendication 3,

**caractérisé en ce que**
la régénération selon la revendication 1 est réalisée uniquement à une température des catalyseurs de stockage d'oxydes d'azote dans le bas de caisse du véhicule (7) de 220 °C-400 °C.

Fig. 1:

Fig. 2

Fig. 3:

NEDC mit sondengeregelten Regenerationen

NEDC mit modellbasierten Regenerationen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009229249 A
- WO 2006069652 A1
- WO 2010034452 A1
- JP 2009150282 A
- DE 102013218234
- EP 1536111 B1
- DE 102010014468 A1
- EP 0982066 A2
- EP 1317953 A1
- WO 2005092481 A1
- EP 1911506 A1
- EP 1101528 A2
- EP 181970 B1
- WO 2008113445 A1
- WO 2008000449 A2
- US 6605264 B2
- US 6468941 B1
- WO 05113126 A1
- US 6387338 B
- US 7041622 BB
- EP 2042225 A1
- EP 1309775 A1
- EP 1663458 A1

**In der Beschreibung aufgeführte Nicht-Patentliteratur**

- **CHRISTIAN HAGELÜKEN.** Autoabgaskatalysatoren, Grundlagen - Herstellung - Entwicklung - Recycling - Ökologie. 2005, 49
- **R. HECK et al.** *Catalytic Air Pollution Control, Commercial Technology,* 1995, 73-112
- Federal Register. *Rules and Regulations,* 2010, vol. 75 (88), 25399
- Federal Register. *Rules and Regulations,* 2012, vol. 77 (199), 62799, http://epa.gov/climatechange/ghgemissions/gases/n2o.html